# EUROPÄISCHE PATENTSCHRIFT

(11) **EP 2 653 369 B1**
(45) Veröffentlichungstag und Bekanntmachung des Hinweises auf die Patenterteilung: **06.06.2018**
(21) Anmeldenummer: 12002772.7
(22) Anmeldetag: 20.04.2012
(51) Int. Cl.: B62D 21/11, B64D 27/26, B66C 3/04

(54) **Leichtbaustruktur**
Lightweight construction structure
Structure de construction légère

(43) Veröffentlichungstag der Anmeldung: 23.10.2013
(73) Patentinhaber: Festo AG & Co. KG, 73734 Esslingen (DE)
(72) Erfinder: Thallemer, Axel, 80796 München (DE); Danzer, Martin, 81929 München (DE); Diensthuber, Dominik, 4652 Fischlham (AT)
(74) Vertreter: Patentanwälte Magenbauer & Kollegen Partnerschaft mbB

(56) Entgegenhaltungen:
- EP-A1- 1 504 983

## Beschreibung

Die Erfindung betrifft eine Leichtbaustruktur, die beispielsweise als Strukturbauteil in verschiedenen Bereichen Anwendung findet.

Leichtbaustrukturen sind bereits seit langem bekannt. Der Hauptgrund für den Einsatz von Leichtbaustrukturen ist die Gewichtsreduktion. Daher finden Leichtbaustrukturen beispielsweise Anwendung im Flugzeugbau, in der Automobilindustrie und in der Bauindustrie, insbesondere beim Bau von Gebäuden.

Aus der EP 1504983 A1 ist eine Leichtbaustruktur gemäß dem Oberbegriff des Anspruch 1 bekannt.

Leichtbaustrukturen können auf unterschiedliche Arten gebildet werden. Es ist möglich, dass Leichtbaumaterial eingesetzt wird, d.h. die Leichtbaustruktur und die Gewichtsersparnis resultieren aus den Materialeigenschaften. Hier sind beispielsweise die aus dem Automobilbau bekannten Aluminium-oder Magnesium-Komponenten zu nennen. Diese bieten einen erheblichen Gewichtsvorteil gegenüber Stahlblech-Komponenten. Selbstverständlich ist auch der Einsatz von Nichtmetall-Komponenten, beispielsweise Kunststoff-Komponenten als Leichtbaumaterial denkbar.

Ein anderer Ansatz ist, die Leichtbaustruktur dadurch zu bilden, dass herkömmlich verwendetes Material mit Material-Ausmagerungen versehen wird, so dass das durch die Material-Ausmagerungen eingesparte Material die Gewichtsreduktion ergibt.

Allen Leichtbaustrukturen ist jedoch gemein, dass die Gewichtsreduktion nicht zu Lasten der Stabilität des gesamten Systems gehen darf. Leichtbaumaterialien sind daher derart auszuwählen, dass deren Materialeigenschaften für den Anwendungszweck eine hinreichende Stabilität gewährleisten. Ist die Stabilität nicht ausreichend, ist es beispielsweise möglich, die Leichtbaustrukturen als Komponenten eines Verbundwerkstoffes einzusetzen, der dann insgesamt eine höhere Stabilität besitzt.

Besonders bei dem oben genannten Anwendungsfall, dass die Leichtbaustrukturen mittels Material-Ausmagerungen geschaffen werden, ergibt sich ein Stabilitätsproblem. Derartige Leichtbaustrukturen lassen sich daher nur dort einsetzen, wo relativ geringe Kräfte auf die Leichtbaustruktur wirken.

Aufgabe der Erfindung ist es, eine Leichtbaustruktur zu schaffen, die gegenüber den aus dem Stand der Technik genannten Leichtbaustrukturen, insbesondere solchen die mittels Material-Ausmagerungen hergestellt sind, eine erhöhte Stabilität aufweist und daher ein breiteres Anwendungsspektrum bietet.

Diese Aufgabe wird durch eine Leichtbaustruktur mit den Merkmalen des unabhängigen Anspruchs 1 gelöst. Weiterbildungen der Erfindung sind in den Unteransprüchen dargestellt.

Die erfindungsgemäße Leichtbaustruktur weist eine Struktureinheit auf, mit wenigstens einem Rahmen, der wenigstens drei Krafteinleitungsbereiche aufweist, wobei eine Rahmenfüllung vorgesehen ist, die eine Gitterstruktur aus mehreren sich kreuzenden Scharen aus jeweils mehreren, Kraftflusslinien folgenden, stetig gekrümmten Abstützstegen aufweist. Ein ganz wesentlicher Effekt der Erfindung ist also, dass die Abstützstege den Kraftflusslinien folgen. Dadurch wird erreicht, dass an den Krafteinleitungsbereichen eingeleitete Kräfte kraftflussoptimiert abgeleitet werden. Ferner sind die Abstützstege krümmungsstetig ausgebildet, um Spannungen, beispielsweise Kerbspannungen, und Fehlbelastungen zu vermeiden. Bei einer Weiterbildung der Erfindung ist die Gitterstruktur dreidimensional ausgebildet. Dadurch ist es auch möglich, auch die in der dritten Raumrichtung wirkende Momente und Kräfte aufzunehmen, die bei Fehlbeanspruchung des mit der Leichtbaustruktur ausgestatteten Systems auftreten können.

In besonders bevorzugter Weise bildet die Gitterstruktur eine Hauptwirkebene der Kraftflusslinien nach. Bei der Hauptwirkebene handelt es sich um diejenige Ebene, in der Hauptkräfte auf die mit der Leichtbaustruktur ausgestattete Komponente wirken. Durch die Nachbildung der Hauptwirkebene der Kraftflusslinien mittels der Abstützstege wird eine optimale Kraftableitung erzielt.

Bei einer Weiterbildung der Erfindung weisen die Abstützstege der einen Schar zu den Abstützstegen der sich mit dieser kreuzenden anderen Schar einander entgegengesetzte Krümmungen auf.

Zweckmäßigerweise weisen sämtliche Abstützstege einer Schar dieselbe Krümmung auf.

Bei der Erfindung sind mehrere Struktureinheiten vorgesehen, die durch Kopplungsmittel miteinander gekoppelt sind.

Bei dem Kopplungsmittel handelt es sich um Gelenke handeln.

Es ist möglich, die Leichtbaustruktur mittels Sintern, insbesondere Lasersintern herzustellen. Da beim Sintern in der Regel pulverförmiges Ausgangsmaterial eingesetzt wird, ist die Ausgestaltung einer Kraftflusslinien nachbildenden Gitterstruktur relativ einfach.

Die Erfindung betrifft ferner noch die Verwendung einer Leichtbaustruktur gemäß einem der Ansprüche 1 bis 6 als Komponente einer Greifeinrichtung.

Die Greifeinrichtung kann beispielsweise auf Basis einer kinematischen Kette ausgebildet sein. Als Beispiel ist ein Greifer zu nennen, der auf dem Prinzip der Watt'schen oder Stephenson'schen Kopplung basieren. Bei einer Watt'schen-Kette handelt es sich um eine sechsgliedrige kinematische Kette mit einem Freiheitsgrad. Die Watt'sche-Kette weist zwei starre Dreiecke auf, die jeweils ein Getriebeglied eines Gelenkgetriebes bilden. Die starren Dreiecke sind jeweils aus drei zueinander ortsfest angeordneten Gelenken aufgespannt, wobei die beiden starren Dreiecke im Fall der Watt'schen-Kette über ein Gelenk miteinander gekoppelt sind, d.h. ein Gelenk des einen starren Dreiecks ist auch ein Gelenk des anderen starren Dreiecks. Es handelt sich also hierbei um eine Dreieckskopplung an einem Punkt. Bei der Stephenson'schen Kette handelt es sich ebenfalls um eine sechsgliedrige kinematische Kette. Hier sind ebenfalls zwei starre Dreiecke vorgesehen, die jedoch im Unterschied zur Watt'schen-Kette über eine Strecke, d.h. über ein weiteres Getriebeglied miteinander gekoppelt sind.

Es ist also möglich, dass einzelne oder sämtliche Getriebeglieder des Gelenkgetriebes einer derartigen Greifeinrichtung aus einer derartigen Leichtbaustruktur bestehen.

Die Erfindung umfasst ferner die Verwendung einer Leichtbaustruktur gemäß einem der Ansprüche 1 bis 6 als Fachwerkstruktur, insbesondere Fachwerkträger. Mit derartigen Fachwerkträgern lassen sich beispielsweise Gebäude, insbesondere Hochhäuser bauen, die ein viel geringeres Gesamtgewicht gegenüber herkömmlich gebauten Hochhäusern besitzen.

Schließlich umfasst die Erfindung die Verwendung einer Leichtbaustruktur gemäss einem der Ansprüche 1 bis 6 als Stützstruktur, insbesondere Stützstrebe in Fluggeräten, beispielsweise Flugzeugen. Vor allem im Flugzeugbau ist eine Gewichtsreduktion einzelner Komponenten bei gleicher Stabilität von großem Interesse.

Ein bevorzugtes Ausführungsbeispiel der Erfindung ist in der Zeichnung dargestellt und wird im Folgenden näher erläutert. Die einzige Zeichnungsfigur der Zeichnung zeigt:
Eine schematische Darstellung eines bevorzugten Ausführungsbeispiels der erfindungsgemäßen Leichtbaustruktur bei der Verwendung in einer Greifeinrichtung.

Die Figur zeigt ein bevorzugtes Ausführungsbeispiel der Leichtbaustruktur 11, die hier rein beispielhaft bei der Verwendung in einer Greifeinrichtung 12 beschrieben wird.

Die Greifeinrichtung 12 dient zum Greifen von Objekten unterschiedlicher Art.

Hierzu befindet sich die Greifeinrichtung 12 in der Regel an einem Handhabungsgerät (nicht dargestellt), das auch als Greifer-Führungsgetriebe bezeichnet werden kann. Die Hauptaufgaben der Greifeinrichtung 12 sind das Herstellen, Aufrechterhalten und Lösen der Verbindung zwischen dem Objekt und dem Handhabungsgerät. Je nach Anwendungsfall kommen zusätzliche Sonderfunktionen wie Änderung der Position des Objekts, Änderung der Orientierung des Objekts und/oder Informationsaufnahme von Objekteigenschaften oder anderen Eigenschaften, beispielsweise mit Hilfe von Sensoren hinzu. Es können beispielsweise Anwesenheitskontrolle und Lageerkennung für Objekte, sowie Kraft-, Moment- und Wegmessungen durchgeführt werden.

Wie in der Figur dargestellt, umfasst die Greifeinrichtung 12 ein Gelenkgetriebe 13 aus mehreren mittels Gelenken 14a-14g gelenkig miteinander verbundenen Getriebegliedern 15a-15f zur Übertragung der Greifkraft und der Greifbewegung auf wenigstens ein auf das greifende Objekt beim Greifen einwirkendes Greifelement 16a, 16b, wobei das Gelenkgetriebe 13 nach Art einer Watt 'schen oder Stephenson 'schen Kette ausgebildet ist.

Bei einer Watt 'schen-Kette handelt es sich um eine sechsgliedrige kinematische Kette mit sechs Getriebegliedern 15a-15f, die jeweils durch Gelenke 14a-14g gelenkig miteinander verbunden sind. Charakteristikum der Watt 'schen-Kette ist das Vorhandensein zweier starrer Dreiecke, die jeweils mittels dreier relativ zueinander ortsfester Gelenke gebildet werden. Bei der Watt 'schen-Kette sind die beiden starren Dreiecke in einem Gelenk miteinander gekoppelt. Man spricht hier auch von einer Dreieckskopplung an einem Punkt.

Grundsätzlich werden die starren Bereiche, die in der Getriebelehre auch als Scheiben bezeichnet werden, als ein Getriebeglied gezählt.

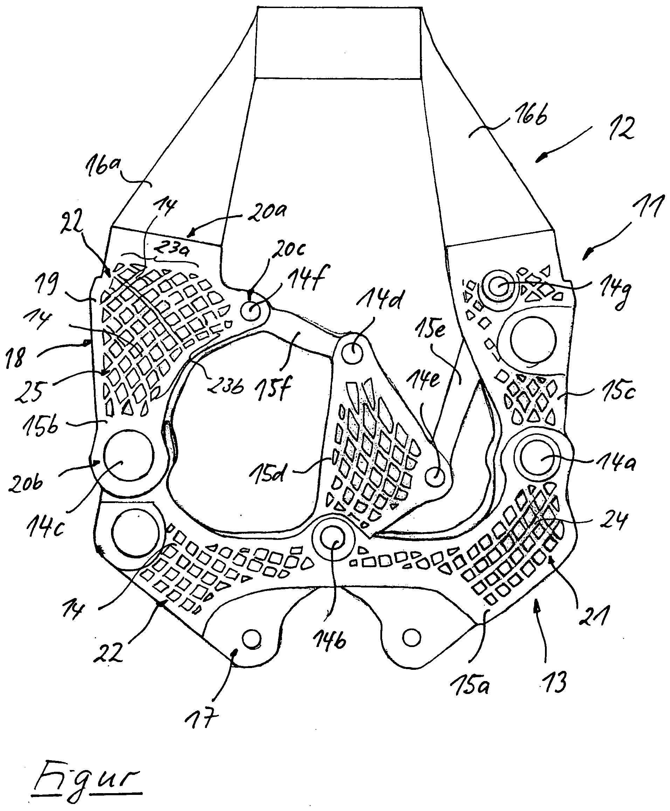

Wie in der Figur 1 dargestellt, ist eines der Getriebeglieder 15a als wippenartiges Trägerteil ausgestaltet. An einer Rückseite des Trägerteils ist eine Montageschnittstelle 17 ausgebildet, über die die Greifeinrichtung 12 an der nicht dargestellten Handhabungseinrichtung montierbar ist. An dem Trägerteil sind von den Gelenken 14a-14g drei relativ zueinander ortsfest angeordnet. Legt man durch die drei Gelenke 14a-14c eine Verbindungslinie, so lassen sich die Gelenke in zwei äußere Gelenke 14a, 14c und ein mittleres Gelenk 14b unterteilen. Es ist also eines der beiden gemäß der Watt 'schen-Kette vorgesehenen starren Dreiecke aufgetrennt, wobei diese Gelenke 14a-14c als Fixpunkte an dem Trägerteil angeordnet sind. Das übrig gebliebene starre Dreieck, das eines der Getriebeglieder 15d des Gelenkgetriebes 13 bildet, ist über das mittlere Gelenk 14b am Trägerteil angelenkt.

An den beiden äußeren Gelenken 14a, 14c ist jeweils ein Greiforgan angeordnet. Die Greiforgane bilden ebenfalls Getriebeglieder 15b, 15c des Gelenkgetriebes 13. Die Greiforgane sind um eine durch die äußeren Gelenke 14a, 14c gebildete Schwenkachse schwenkbar am Trägerteil gelagert und können zwischen einer das Objekt greifenden Greifstellung und einer Freigabestellung relativ zueinander verschwenkt werden. Die dadurch erzeugte Greifbewegung ist eine Art Zangengriff. An den Greiforganen ist jeweils ein Greifelement 16a, 16b lösbar befestigbar.

Neben den beiden am Trägerteil ausgebildeten äußeren Gelenken 14a, 14c besitzen die Greiforgane jeweils noch ein weiteres Gelenk 14f, 14g, an dem ein weiteres Getriebeglied in Form eines Hebels 15e, 15f angelenkt ist. Diese Getriebeglieder 15e, 15f sind jeweils über ein weiteres Gelenk 14d, 14e am starren Dreieck angelenkt.

Die Leichtbaustruktur 11 besitzt wenigstens eine Struktureinheit 18, mit wenigstens einem Rahmen 19, der wenigstens drei Krafteinleitungsbereiche 20a-20c aufweist, wobei eine Rahmenfüllung 21 vorgesehen ist, die eine Gitterstruktur 22 aus mehreren sich kreuzenden Scharen 23a, 23b aus jeweils mehreren, Kraftflusslinien folgenden, stetig gekrümmten Abstützstegen 24 aufweist.

Im beschriebenen Beispielsfall sind mehrere Struktureinheiten 18 vorgesehen, nämlich die beiden als Greiforgane ausgebildeten Getriebeglieder 15b, 15c, das als Trägerteil ausgebildete Getriebeglied 15a und das starre Dreieck 15d.

Wie beispielhaft am in der Figur linken Greiforgan erläutert, besitzt dieses drei Krafteinleitungsbereiche 20a-20c und zwar einen ersten Krafteinleitungsbereich 20a am Rahmen 19 im Übergangsbereich zwischen dem Greiforgan und dem angesetzten Greifelement 16a, einen zweiten Krafteinleitungsbereich 20b im Bereich des Gelenks 14c zwischen dem Greiforgan und dem Trägerteil und schließlich einen dritten Krafteinleitungsbereich 20c im Bereich des Gelenks 14f zwischen dem Greiforgan und dem angesetzten als Hebel ausgebildeten Getriebeglied 15f.

Wie zu erkennen ist, verläuft eine Schar 23a an Abstützstegen 24 stetig gekrümmt zwischen dem zweiten und dem dritten Krafteinleitungsbereich 20b, 20c. Dabei werden beispielswiese Stoßkräfte, die senkrecht zu den Schwenkachsen der Gelenke 14c, 14f auf das Greiforgan eingeleitet werden optimal abgeleitet. Eine andere Schar 23b, die sich mit der ersten Schar 23a kreuzt krümmt sich zwischen der dem ersten und dem zweiten Krafteinleitungsbereich 20a, 20b. Hier werden beispielsweise Reaktionskräfte, die beim Greifen des Objekts auf das Greifelement 16a wirken und über dieses auf das Greiforgan übertragen werden, ebenfalls optimal abgeleitet.

Was in der Zeichnung nicht zu erkennen ist, ist dass die Gitterstruktur 22 dreidimensional ausgebildet ist. Die beiden sich kreuzenden Scharen 23a, 23b erstrecken sich also zusätzlich in Tiefenrichtung senkrecht zur Zeichenebene. Dadurch werden auch in der dritten Raumrichtung auftretende Kräfte, beispielsweise Querkräfte optimal abgeleitet.

Die in der Zeichnungsebene in X- und Y-Richtung eines durch kartesische Koordinaten aufgespannten kartesischen Koordinatensystems sich erstreckenden Schare 23a, 23b, bilden die Hauptwirkebene 25 nach.

Ein mit derartigen Struktureinheiten 18 ausgestattete Greifeinrichtung 11 hat gegenüber einer mit Komponenten aus Vollmaterial ausgestatteten Greifeinrichtung 12 einen erheblichen Gewichtsvorteil. Dennoch geht dieser Gewichtsvorteil nicht zu Lasten der Stabilität, da die Abstützstege 24 den Kraftflusslinien folgen und daher der Kraftfluss optimal verläuft.

## Patentansprüche

1. Leichtbaustruktur, mit einer Struktureinheit (15a, 15b, 15c, 15d), mit wenigstens einem Rahmen (19), der wenigstens drei Krafteinleitungsbereiche (20a-20c) aufweist, wobei eine Rahmenfüllung (21) vorgesehen ist, die eine Gitterstruktur (22) aus mehreren sich kreuzenden Scharen (23a, 23b) aus jeweils mehreren, Kraftflusslinien folgenden, stetig gekrümmten Abstützstegen (24) aufweist, **dadurch gekennzeichnet, dass** mehrere Struktureinheiten (15a-15b) vorgesehen sind, die durch Kopplungsmittel in Form von Gelenken (14a-14g) miteinander gekoppelt sind.

2. Leichtbaustruktur nach Anspruch 1, **dadurch gekennzeichnet, dass** die Gitterstruktur (22) dreidimensional ausgebildet ist.

3. Leichtbaustruktur nach Anspruch 1 oder 2, **dadurch gekennzeichnet, dass** die Gitterstruktur (22) eine Hauptwirkebene (25) der Kraftflusslinien nachbildet.

4. Leichtbaustruktur nach einem der vorhergehenden Ansprüche, **dadurch gekennzeichnet, dass** die Abstützstege (24) der einen Schar (23a) zu den Abstützstegen (24) der sich mit dieser kreuzenden anderen Schar (23b) einander entgegengesetzte Krümmungen aufweisen.

5. Leichtbaustruktur nach einem der vorhergehenden Ansprüche, **dadurch gekennzeichnet, dass** sämtliche Abstützstege (24) einer Schar (23a, 23b) dieselbe Krümmung aufweisen.

6. Leichtbaustruktur nach einem der vorhergehenden Ansprüche, **gekennzeichnet durch** deren Herstellung mittels Sintern, insbesondere Lasersintern.

7. Verwendung einer Leichtbaustruktur gemäß einem der Ansprüche 1 bis 6 als Komponente einer Greifeinrichtung (12).

8. Verwendung einer Leichtbaustruktur gemäß einem der Ansprüche 1 bis 6 als Fachwerkstruktur, insbesondere Fachwerkträger.

9. Verwendung einer Leichtbaustruktur gemäß einem der Ansprüche 1 bis 6 als Stützstruktur, insbesondere Stützstrebe in Fluggeräten, beispielsweise Flugzeugen.

## Claims

1. Lightweight structure with a structural unit (15a, 15b, 15c, 15d), with at least one frame (19) which has at least three force initiation areas (20a-20c), wherein a frame filling (21) is provided which has a grid structure (22) of several intersecting blades (23a, 23b), in each case of several steadily curved support struts (24) following force flow lines, **characterised in that** several structural units (15a-15b) are provided, connected to one another by connecting means in the form of joints (14a-14g).

2. Lightweight structure according to claim 1, **characterised in that** the grid structure (22) is three-dimensional in form.

3. Lightweight structure according to claim 1 or 2, **characterised in that** the grid structure (22) reproduces a main plane of action (25) of the force flow lines.

4. Lightweight structure according to any of the preceding claims, **characterised in that** the support struts (24) of the one blade (23a) have opposite curvatures to the support struts (24) of the other blade (23b) intersecting the former.

5. Lightweight structure according to any of the preceding claims, **characterised in that** all support struts (24) of a blade (23a, 23b) have the same curvature.

6. Lightweight structure according to any of the preceding claims, **characterised by** production by means of sintering, in particular laser sintering.

7. Use of a lightweight structure according to any of claims 1 to 6 as component of a gripping device (12).

8. Use of a lightweight structure according to any of claims 1 to 6 as a framework structure, in particular a framework member.

9. Use of a lightweight structure according to any of claims 1 to 6 as a support structure, in particular support struts in flying machines, for example aircraft.

## Revendications

1. Structure de construction légère, avec une unité structurelle (15a, 15b, 15c, 15d), avec au moins un châssis (19), qui présente au moins trois zones de transmission de force (20a - 20c), dans laquelle un remplissage de châssis (21) est prévu, lequel présente une structure en treillis (22) composée de plusieurs groupes (23a, 23b) s'entrecroisant composés de respectivement plusieurs entretoises de soutien (24) incurvées de manière constante, suivant des lignes de flux de force, **caractérisée en ce que** plusieurs unités structurelles (15a - 15b) sont prévues, lesquelles sont couplées les unes aux autres par des moyens de couplage sous la forme d'articulations (14a - 14g).

2. Structure de construction légère selon la revendication 1,
**caractérisée en ce que** la structure en treillis (22) est réalisée de manière tridimensionnelle.

3. Structure de construction légère selon la revendication 1 ou 2, **caractérisée en ce que** la structure en treillis (22) reproduit un plan d'action principal (25) des lignes de flux de force.

4. Structure de construction légère selon l'une quelconque des revendications précédentes, **caractérisée en ce que** les entretoises de soutien (24) d'un groupe (23a) présentent des incurvations opposées par rapport aux entretoises de soutien (24) de l'autre groupe (23b) s'entrecroisant avec le premier groupe.

5. Structure de construction légère selon l'une quelconque des revendications précédentes, **caractérisée en ce que** toutes les entretoises de soutien (24) d'un groupe (23a, 23b) présentent la même incurvation.

6. Structure de construction légère selon l'une quelconque des revendications précédentes,
**caractérisée par** sa fabrication au moyen d'un frittage, en particulier d'un frittage par laser.

7. Utilisation d'une structure de construction légère selon l'une quelconque des revendications 1 à 6 en tant que composant d'un système de préhension (12).

8. Utilisation d'une structure de construction légère selon l'une quelconque des revendications 1 à 6 en tant que structure de charpente, en particulier que support de charpente.

9. Utilisation d'une structure de construction légère selon l'une quelconque des revendications 1 à 6 en tant que structure d'appui, en particulier en tant qu'entretoises d'appui dans des engins volants, par exemple des avions.
